# EUROPEAN PATENT APPLICATION

(11) **EP 4 431 538 A1**
(43) Date of publication of application: **18.09.2024**
(21) Application number: 22893216.6
(22) Date of filing: 10.11.2022
(51) Int. Cl.: C08G 18/08, C08G 18/32

(54) **ECO-FRIENDLY POLYURETHANE FOAM USING ALDEHYDE COMPOUND AND DIELS-ALDER REACTION PRODUCT OF ALDEHYDE COMPOUND AND METHOD FOR FORMING SAME**

(30) Priority: 10.11.2021 KR 20210153788
(71) Applicant: NWT Co., Ltd,, Seoul 06715 (KR)
(72) Inventor: LEE, Daisu, Seongnam-si, Gyeonggi-do 13100 (KR); LEE, Siho, Seoul 05649 (KR); YANG, Jun, Seoul 05607 (KR)
(74) Representative: v. Bezold & Partner Patentanwälte - PartG mbB
(86) International application number: PCT/KR2022/017615
(87) International publication number: WO 2023/085797

(57) **Abstract**

This invention achieves a sequential use of blowing agents by reducing the amount of water used as a blowing agent in the manufacturing process of polyurethane foam, and instead, employing aldehyde compounds and/or Diels-Alder reaction products of aldehyde compounds as initial raw materials. As a result, it becomes possible to sequentially utilize blowing agents. Consequently, this invention enables the regulation of exothermic reactions during the foaming process and the control of reaction heat in the manufacturing process of polyurethane foam without using low-boiling-point auxiliary blowing agents. Additionally, by reducing the formation of urea compounds, this invention can address the tendency of polyurethane foam to become friable. Moreover, utilizing the hydrolytic properties of Schiff bases allows for the chemical recycling of waste polyurethane foam at low temperatures.

## Description

### Technical Field

The present invention relates to a method for manufacturing polyurethane foam, and more particularly, to a method for manufacturing polyurethane foam that can reduce the amount of blowing agent during urethane reaction and control the heat of reaction during urethane foaming reaction, and polyurethane foam produced by the method.

### Background Technology

Most polyurethane foams today are manufactured using systems composed of polyols and polyisocyanates as main raw materials, along with blowing agents, catalysts, and silicone-based surfactants.

Depending on the molecular weight and the number of functional groups of polyols, one of the main raw materials, either flexible or rigid foam can be obtained, and the density can be adjusted depending on the amount of blowing agent.

Flexible polyurethane foam is typically produced using polyols with relatively large molecular weights (typically in the range of 3,000 to 6,000 g/mol) and an average of about 3 functional groups. It is mainly used in the manufacturing of furniture, mattresses, car seats, shoes, etc. On the other hand, rigid polyurethane foam, which is used as various heat insulating materials, is produced using polyols with relatively small molecular weights (with an average molecular weight range of 300 to 800 g/mol) and typically 4 to 5 functional groups.

Polyisocyanates used in the production of polyurethane foam along with polyols are mainly aromatic isocyanates such as toluene diisocyanate (TDI) and 4,4'-diphenyl methane diisocyanate (MDI).

Water is commonly used as the primary blowing agent in the production of polyurethane foam. Water introduced as raw materials from reacts with polyisocyanates, generating a large amount of energy and producing carbon dioxide (CO₂), which is then utilized in the foaming process. The chemical reaction associated with this is as follows:

R₁-NCO + H₂O → R₁-NH₂ + CO₂ (1)

In the above reaction (1), Ri represents the composition of aromatic and aliphatic structures of polyisocyanates excluding one isocyanate group.

Furthermore, in the reaction (1), R₁-NCO represents polyisocyanates containing two or more isocyanate groups (-NCO).

The amine (R₁-NH₂) generated along with carbon dioxide in the reaction (1) reacts with isocyanates to form urea (-NH(C=O)HN-) and the related chemical reaction is as follows:

R₁-NH₂ + R₁-NCO → R₁-NH(C=O)HN-R₁ (2)

In the above reaction (2), Ri represents the composition of aromatic and aliphatic structures of polyisocyanates excluding one isocyanate group.

As the amount of urea formed in the reaction (2) increases, there is a tendency for polyurethane foam to become friable, and the internal temperature rises, leading to concerns about scorching-induced decomposition. To prevent this, low-boiling-point auxiliary blowing agents that can absorb heat and contribute to foaming are used in conjunction during the polyurethane foam manufacturing process. However, auxiliary blowing agents have limited storage stability due to their low boiling points. Hydrocarbon compounds such as cyclopentane, which are commonly used as auxiliary blowing agents, require facilities and management for the preventing of explosion and fire due to their flammability.

Furthermore, various recycling technologies have been developed and utilized to chemically treat waste generated after the use of various polyurethane foams, producing polyols that can be used again in polyurethane foam manufacturing. Conventional polyurethane foam requires a high-temperature (180°C to 220°C) process for depolymerization to be chemically recycled, necessitating specialized high-temperature depolymerization plants that are difficult to operate at industrial sites where polyurethane foam waste is generated.

In conclusion, traditional polyurethane foam manufacturing technology, which uses water as the primary blowing agent, inherently includes the cause of scorching due to the instantaneous reaction of water introduced along with the initial raw materials and isocyanates, resulting in the accumulation of high-temperature heat inside.

Furthermore, the traditional polyurethane foam manufacturing technology inevitably results in excess urea (-NH(C=O)HN-) formation as the generated amine (R₁-NH₂) reacts again with isocyanates, and the presence of urea contributes to the friability in conventional rigid polyurethane foam.

The relevant prior arts in relation to this patent applications are as follows:
Korean Patent Registration No. 10-0936319 (Registration Date: January 4, 2010);
Korean Patent Registration No. 10-2092424 (Registration Date: March 17, 2020);
Korean Patent Registration No. 10-2023224 (Registration Date: September 11, 2019);
Korean Patent Publication No. 10-2009-0090298 (Publication Date: August 25, 2009).

In addition, as non-patent literature relevant to this patent application, the following are cited:
D. Simon, A.M. Borreguero, A. de Lucas, J.F. Rodriguez, "Recycling of polyurethanes from laboratory to industry, a journey towards sustainability", Waste Management, 76, 147-171(2018).
M. Modesti, "Recycling of polyurethane polymers", Advances in Urethane Science and Technology, vol. 13. Technomic Publishing CO (USA), 1996.
R. D. Patil and S. Adimurthy, "Catalytic Methods for Imine Synthesis", Asian Journal of Organic Chemistry, 2, 726-744 (2013).

### Detailed Description of the Invention

### Technical Problem

The objective of the present invention is to provide a method for manufacturing polyurethane foam that can reduce the amount of water, a blowing agent used in raw materials during polyurethane foam production, and control the heat generated during urethane reaction.

Another objective of the present invention is to provide a polyurethane foam that contains less urea (-NH(C=O)HN-) in its final composition by reducing the amount of water, a blowing agent used in raw materials during polyurethane foam production, and controlling the heat generated during urethane reaction.

### Means of Solving the Problem

The present invention involves a method of manufacturing polyurethane using raw materials consisting of polyols, isocyanates, water as a blowing agent, and other additives. The present invention introduces aldehyde compounds as a technical feature, partially reducing the amount of water among the raw materials.

In the present invention, the aldehyde compounds react with the amine compounds (Ri-NH₂) generated during the polyurethane reaction process. The aldehyde compounds perform various competitive functions during the polyurethane reaction process and constitute the technical features of the present invention.

First, the aldehyde compounds perform the first function of supplementing the insufficient amount of water, which serves as a blowing agent among the initial raw materials.

In the polyurethane reaction process, when the initial raw materials are injected under high pressure for foaming, isocyanate compounds react with water as shown in reaction (1) to form amines. The newly formed amine compounds (R₁-NH₂) react with the aldehyde compounds introduced in the present invention during the polyurethane reaction process, forming a Schiff-base and generating water. This can be confirmed through the following reaction (3).

R₁-NH₂ + HCOR₂ → R₁-N=CH-R₂ + H₂O (3)

In reaction (3), Ri represents the composition of aromatic and/or aliphatic structures of polyisocyanates excluding one isocyanate group, and R₂ represents the composition of aromatic and/or aliphatic structures of aldehyde compounds excluding one aldehyde group. The water generated in reaction (3) supplements the insufficient amount of water, which serves as a blowing agent among the initial raw materials.

Therefore, the present invention can supply a relatively small amount of water when configuring the initial raw materials.

Additionally, the aldehyde compounds perform the second function of regulating or controlling the exothermic reaction during the polyurethane reaction.

Typically, the rapid reaction between isocyanates and water in the urethane reaction process leads to a sudden increase in temperature in the urethane foam, making it difficult to control the scorching phenomenon. This phenomenon was a problem that had not been technically solved as long as it was due to the nature of the urethane reaction according to the conventional technology, and it inevitably uses a low-boiling auxiliary foaming agent with a high risk of explosion and fire.

On the other hand, the present invention solves this problem at once by establishing a reaction system in which the blowing agent involved in the urethane reaction can be introduced at a time interval without adding the blowing agent at once. Instead of reducing the amount of water initially added, the present invention supplements and uses newly generated water during the urethane reaction, as confirmed in reaction (3). This means that water contained in the initial raw material is used as an initial blowing agent, while water of reaction (3) newly generated in the process of the urethane reaction is used as a post blowing agent. Consequently, the present invention maintains the total amount of the foaming agent, but is divided into the initial foaming agent in the raw material and the post blowing agent generated during the urethane reaction, and is used with a temporal gap.

Therefore, the present invention provides a solution to prevent overheating that rises momentarily during the urethane reaction, thereby reducing the possibility of pyrolysis of foam that causes scotch and controlling the overheating during the urethane reaction.

Furthermore, the aldehyde compounds perform the third function of reducing the friability of polyurethane foam caused by the inevitable inclusion of excess urea components in polyurethane foam due to the urea formation reaction. This is achieved by the aldehyde compounds reacting with the amine compounds inevitably generated during the urethane reaction to deplete the amine compounds, thereby reducing the amount of urea compounds produced and preventing the friability of the final polyurethane foam.

The conventional urethane reaction typically generates amine compounds (R₁-NH₂) as shown in reaction (1) above, and these amine compounds cannot avoid forming urea compounds as shown in reaction (2) above. When the amount of urea compounds increases, it leads to the friable polyurethane foam. Therefore, according to conventional techniques, the final polyurethane foam shows the friability caused by urea compounds as a problem. To mitigate this issue, it is inevitable to use low-boiling-point auxiliary blowing agents, which pose a high risk of explosion and fire.

In contrast, the present invention involves the aldehyde compound reacting with the amine compound as seen in reaction (3), forming a Schiff-base and generating water. In this process, the aldehyde compound reacts with the amine compound, resulting in the conversion of the amine compound into a Schiff-base. Therefore, the present invention can prevent the excessive formation of urea by the amine compound during the polyurethane reaction process, thereby solving the problem of foam friability.

Furthermore, the aldehyde compound performs the fourth function of securing stability in the polyurethane manufacturing process and mitigating the possibility of fire caused by the auxiliary foaming agent by eliminating or reducing the amount of auxiliary foaming agent used in the conventional polyurethane reaction.

By using the aldehyde compound, the necessity of using traditional auxiliary blowing agents is reduced, naturally decreasing the associated risks.

As described above, the conventional urethane reaction inevitably generates amine compounds (R₁-NH₂) as in reaction (1), and produces urea compounds as in reaction (2), leading to the occurrence of urea compounds that can cause the friability of polyurethane foam when their concentration increases. Therefore, in conventional techniques, to minimize the generation of amine compounds, it is necessary to reduce the use of water as a blowing agent, which, however, requires the use of auxiliary blowing agents. However, hydrocarbon compounds such as cyclopentane, commonly used as auxiliary blowing agents today, are highly flammable and require high-pressure storage facilities. Consequently, the conventional approach involves the risk of fire due to the high flammability of auxiliary blowing agents and the need for high-pressure storage facilities.

In contrast, the present invention involves the aldehyde compound reacting with the amine compound to form a Schiff-base as shown in reaction (3) and generate water, effectively controlling the urea content to an appropriate level.

Therefore, the present invention significantly reduces the need for auxiliary blowing agents, eliminating the necessity of using auxiliary blowing agents with their highly flammable nature and the requirement for high-pressure storage facilities.

Additionally, the aldehyde compound has a fifth eco-friendly function that makes it much easier to perform in a low-temperature depolymerization method when the final polyurethane foam is collected as a waste polyurethane foam and depolymerized after being used for each purpose.

This is achieved by carrying out the depolymerization process at relatively low temperatures (below 100°C) when depolymerizing polyurethane foam products manufactured by the method of the present invention.

This allows for the efficient recovery of waste generated in industrial sites, preventing environmental damage. When depolymerizing polyurethane foam products obtained by the method of the present invention, the reverse reaction of reaction (3) can occur, represented by reaction (3').

R₁-N=CH-R₂ + H₂O → R₁-NH₂ + HCOR₂ (3')

In reaction (3'), R₁ and R₂ are the same as in reaction (3). In this case, the Schiff-base (R₁-N=CH-R₂) can undergo hydrolysis at relatively mild temperatures (below 100°C), converting into amine and aldehyde compounds.

Therefore, the present invention facilitates chemical recycling for easy acquisition of raw materials compared to conventional methods, efficiently recovering waste generated in industrial sites to prevent environmental damage.

In the present invention, aldehyde compounds are utilized in the manufacturing process of polyurethane foam, and it is desirable for them to contain two or more aldehyde groups within a single molecule. This is to prevent the crosslinking density of the polyurethane foam from being lowered. In addition, the aldehyde compounds may be selected and used from those that do not cause VOC-induced problems. In addition, as the aldehyde compounds, hydroxyaldehyde compounds such as hydroxyl methyl furfural and vanillin may also be used. In general, these aldehyde compounds are advantageous because aliphatic compounds show fast reactivity, but aromatic aldehyde compounds may also be used, and if necessary, a material such as copper nitrate may be added as a catalyst to increase reactivity. The amount of the aldehyde compound added may be determined according to the density of the foam to be prepared in consideration of the amount of water produced by Schiff-base formation.

The present invention is characterized in that in the method of producing polyurethane using polyol, isocyanate, water, and additives as raw materials, instead of reducing the amount of water input above, Diels-Alder reaction products of aldehyde compounds (hereinafter refferred to as "DA reaction products") are used together with the aldehyde compounds or alone.

The present invention has the advantage of using the fact that when the DA reaction products of the aldehyde compound is used together with the aldehyde compound or alone in a polyurethane production process, the DA reaction products of the aldehyde compound perform a reversible reaction according to a temperature range. The present invention has another advantage of being able to control the internal temperature of the polyurethane production process through a reversible reaction by the DA reaction products of the aldehyde compounds.

The DA reaction products of the aldehyde compound have reversibility, and they undergo an exothermic forward reaction in the low-temperature range around 90°C or below, while undergoing an endothermic reverse reaction in the high-temperature range around 130°C or above. By including the DA reaction products of the aldehyde compound in the polyurethane manufacturing process, it performs the function of temperature regulation in the internal exothermic reactions during the urethane reaction. Therefore, when using the DA reaction products of the aldehyde compound together with the aldehyde compound or alone, besides performing the overall functions of the aldehyde compound, an additional advantage is gained in controlling the temperature of the internal reactions during the urethane reaction.

In the present invention, a theoretical basis for performing the temperature control function of an internal reaction of the DA reaction products of the aldehyde compound may be described as follows:

Generally, in the case of a conjugated diene compound containing two double bonds, a reaction occurs to form a DA reaction products with an unsaturated compound, as shown in reaction (4) below:

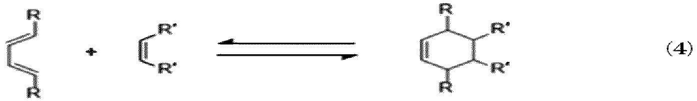

In reaction (4), R represents the remaining alkyl structure of compounds containing a diene group, and R' represents the remaining alkyl structure of compounds containing a dienophile group.

Such DA reactions form different reaction mechanisms at low and high temperatures. Specifically, the DA reaction shows reversibility and generally proceeds with an exothermic reaction around low temperatures (around 90°C or below), while proceeding with an endothermic reaction at high temperatures (around 130°C or above). Moreover, the heat released or absorbed during the reversible reaction differs depending on the structures of R and R', typically around 20 kcal/mol.

For aldehyde compounds such as furfural containing two double bonds in a conjugated diene, a reaction occurs with an unsaturated compound (e.g., pyrimidine) to produce DA reaction products, as shown in reaction (5) below:

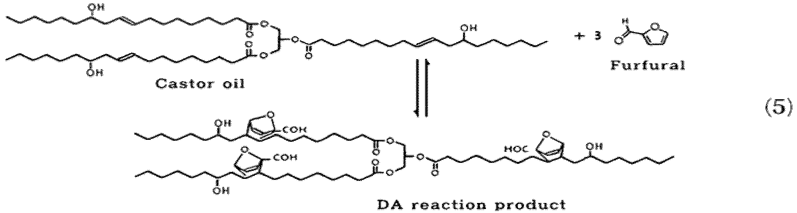

These DA reaction products exhibit characteristics of aldehyde compounds while also demonstrating properties of DA reaction products. Specifically, in the manufacturing process of polyurethane foam, these aldehyde compounds' DA reaction products can be utilized as blowing agents by generating water while forming Schiff bases. This not only addresses the issue of foam friability by avoiding excessive urea formation but also effectively prevents excessive internal temperature rise through endothermic reverse reactions when the internal temperature rises to high levels (above 130°C).

In the manufacturing process of polyurethane foam, when it is necessary to more effectively control the rise in internal temperature due to exothermic reactions and consequent changes in foam properties, the use of Diels-Alder (DA) reaction products of aldehydes containing diene groups such as furan can lower the internal temperature rise through an exothermic reverse DA reaction occurring at high temperatures. Moreover, the amount of added aldehyde compounds for DA reaction can be determined based on the cooling degree required during the process. Unsaturated compounds with diene reactivity for the DA reaction, such as acrolein, which possess both double bonds and aldehyde groups, can react in a 1:1 molar ratio with furfural containing diene groups to yield dienodialdehydes with DA reaction product structures as shown in reaction (6) below.

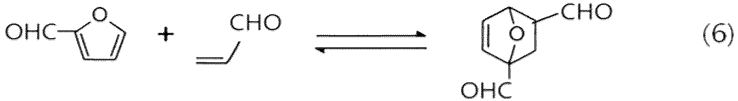

Moreover, when compounds with two or more double bonds remain unreacted, if furfural is used as the aldehyde, polyaldehydes with two or more structures of DA reaction products can be obtained according to Equation (6).

These aldehyde compounds all form Schiff-bases during the manufacture of polyurethane foam, generating water, and through the foaming caused by the generated water, foam can be safely and effectively produced. After use, polyurethane waste can be easily recycled through chemical recycling via hydrolysis reactions at relatively low temperatures in industrial settings.

### Advantages of the Invention

The present invention enables the appropriate control of heat generated in the polyurethane foam manufacturing process and overcomes the problem of foam friability. Therefore, utilizing the technology of the present invention offers the advantage of resolving the heat and friability issues inherent in conventional polyurethane foam manufacturing processes.

Furthermore, when the DA reaction products of aldehydes are used instead of conventional blowing agents, there is the advantage of superior stability in storing raw materials and ensuring the quality of the final product.

Moreover, by using aldehyde compounds to manufacture polyurethane foam and subsequently recycling the waste polyurethane foam, the advantage lies in conducting hydrolysis for depolymerization under atmospheric pressure, thereby allowing environmentally friendly recycling through polymerization.

### Best Mode for Implementing the Invention

Below, the present invention is described in a more concrete and detailed manner. Specific numerical values or specific embodiments provided herein are intended to illustrate preferred embodiments of the present invention and to describe the technical concept of the present invention in more detail, and it is clear that the present invention is not limited thereto. Furthermore, in the specification of the present invention, detailed descriptions are omitted for parts that can be easily created by those skilled in the art with ordinary knowledge in this technical field.

The present invention relates to a method for producing polyurethane using raw materials composed of polyol, isocyanate, water as a blowing agent, and other additives, wherein the technical feature is to introduce aldehyde compound, reducing the amount of water among the raw materials.

In the present invention, the aforementioned aldehyde compounds react with the amine compounds (R₁-NH₂) generated by the reaction of isocyanate and water during the polyurethane reaction process. The aldehyde compounds perform various functions as already described during the polyurethane reaction process, and these functions constitute the technical features of the present invention.

In the present invention, it is desirable for the aldehyde compound used to contain one or more aldehyde groups within the molecule. Particularly, compounds containing two or more aldehyde groups within the molecule, such as glutaraldehyde, glyoxal, terephthalaldehyde, and 2,5-furandicarboxaldehyde, are desirable to prevent a decrease in the crosslink density of polyurethane foam during the urethane reaction process. Additionally, to enhance the solubility of these aldehyde compounds, di-aldehyde compounds with amine terminal groups can be capped as di-aldehyde compounds to produce Schiff-base alkaline products. Examples of diamines that can be used for Schiff-base alkaline formation to enhance the solubility of di-aldehyde compounds include polyoxyalkyleneamines with amine terminals. Aldehyde compounds such as glutaraldehyde, which are distributed in aqueous solution, can be mixed with a certain amount of polyol and then subjected to a dehydration process to produce polyols with a certain concentration of di-aldehyde for use in polyurethane foam raw material blending. The reactivity of di-aldehyde compounds with amines varies depending on the type of substituents, but is generally very good. Various catalysts introduced in the prior art literature that promote Schiff-base alkaline formation reactions can be used if promoting Schiff-base alkaline formation reactions is required in the process.

This invention suggests that, in the manufacturing of polyurethane foam using aldehyde compounds, while sequential exothermic reactions facilitated by the foaming process due to water generated by aldehyde compounds help control excessive heat, it may also be advantageous to introduce an endothermic mechanism through reactions to further regulate excessive reaction heat.

For this purpose, utilizing the DA reaction products of aldehyde compounds proves effective. These DA reaction products exhibit endothermic properties by undergoing reverse reactions at high temperatures (above 130°C). Manufacturing such DA reaction products can involve employing aldehyde compounds with diene structures, such as furfural, and compounds with reactive unsaturated bonds. Preferably, aldehyde compounds possessing reactive unsaturated bonds, like acrolein, are suitable. This is because reaction (6) mentioned above allows for the formation of dienodialdehydes with DA reaction product structures.

In addition, in order to obtain an aldehyde with the DA reaction product structure, even when it does not have an aldehyde group such as acrolein, an aldehyde compound with two or more non-hybridized double bonds in the molecule can be used. As a representative compound, castor oil as shown in Scheme (5) can be exemplified. In addition, in order to obtain the aldehyde compound with the DA reaction product structure, a maleimide compound frequently used as having two or more unsaturated bonds that are not hybridized may be used.

In the present invention, it is desirable that the amount of aldehyde compounds added for the manufacture of polyurethane foam has an aldehyde group concentration ranging from 10 milliequivalents to 300 milliequivalents per 100 grams of polyol. If the concentration of aldehyde groups in 100 grams of polyol is less than 10 milliequivalents, the control effect of reaction heat during the manufacture of polyurethane foam is not practically significant. Conversely, if the concentration of aldehyde groups in 100 grams of polyol exceeds 300 milliequivalents, the molecular interaction between urethane and urea groups, which impart inherent toughness to polyurethane, is significantly hindered by the formation of Schiff bases and alkalis, leading to degradation of the physical properties of the polyurethane foam.

In the present invention, it is also desirable that the amount of DA reaction products of aldehyde compounds added for the manufacture of polyurethane foam has a concentration of DA reaction products ranging from 10 milliequivalents to 300 milliequivalents per 100 grams of polyol. If the concentration of DA reaction products in 100 grams of polyol is less than 10 milliequivalents, the control effect of reaction heat during the manufacture of polyurethane foam is not practically significant. Conversely, if the concentration of DA reaction products in 100 grams of polyol exceeds 300 milliequivalents, the molecular interaction between urethane and urea groups, which impart inherent toughness to polyurethane, is significantly

hindered, resulting in a considerable deterioration of the physical properties of the polyurethane foam.

Furthermore, in the present invention, it is desirable that the amounts of aldehyde compounds and DA reaction products of aldehyde compounds added for the manufacture of polyurethane foam have concentrations ranging from 10 milliequivalents to 300 milliequivalents per 100 grams of polyol. If the concentration of both the aldehyde compounds and DA reaction products of aldehyde compounds in 100 grams of polyol is less than 10 milliequivalents, the control effect of reaction heat during the manufacture of polyurethane foam is not practically significant, thus making it undesirable. Similarly, if the concentration of both the aldehyde compounds and DA reaction products of aldehyde compounds in 100 grams of polyol exceeds 300 milliequivalents, the molecular interaction between urethane and urea groups is significantly hindered, resulting in a deterioration of the physical properties of the polyurethane foam, making it undesirable.

Below, the present invention is further described in detail through specific examples. However, the numbers given in the examples are provided to aid in understanding the invention and do not limit the scope of the invention.

### <<Example 1: Control >>

Polyurethane foam was prepared using the standard experimental procedure commonly performed in this technical field. In conducting this standard experimental procedure, the formulation for foam production in Table 1 is denoted as Control.

For the manufacture of flexible polyurethane foam, 100 grams of polyol (PPG) was added to a 500 mL polypropylene cup at room temperature. Subsequently, silicone surfactant (L580, from Momentive) 1.0 gram, amine catalyst (A-1, from Momentive) 0.1 gram, amine catalyst (DABCO 33LV, from EVONIK) 0.4 gram, tin catalyst (T9, from EVONIK) 0.38 gram, and water 4.2 grams were added according to the blending prescription in Table 1, followed by stirring at 1000 rpm for 2 minutes using a stirrer. TDI was added to the blended raw material mixture according to the blending prescription in Table 1, stirred at 2000 rpm for 10 seconds using a stirrer, and then poured into pre-prepared 2-liter paper cups.

### « Manufacturing Example A-1 »

In order to confirm the results obtained upon addition of aldehyde compounds in the manufacture of polyurethane foam according to the present invention, the inventors decided to proceed with the standard experimental procedure of Example 1 through the present invention.

In the present manufacturing example A-1, the initial raw material blending prescription according to Example 1 was followed, and thereafter, all processes were carried out identically to Example 1, except that the amount of water supplied in the initial raw material blending was reduced to 3.7 grams and, instead, 1.39 grams of glutaraldehyde was newly added.

Other procedures were carried out under the same conditions as Example 1. The initial raw material blending prescription according to the present manufacturing example A-1 can be confirmed by Table 1.

### « Manufacturing Example A-2 »

In order to confirm the results obtained upon addition of aldehyde compounds in the manufacture of polyurethane foam according to the present invention, the inventors decided to proceed with the standard experimental procedure of Example 1 through the present invention.

In the present manufacturing example A-2, the initial raw material blending prescription according to Example 1 was followed, and thereafter, all processes were carried out identically to Example 1, except that the amount of water supplied in the initial raw material blending was reduced to 3.2 grams and, instead, 2.78 grams of glutaraldehyde was newly added.

Other procedures were carried out under the same conditions as Example 1. The initial raw material blending prescription according to the present manufacturing example A-2 can be confirmed by Table 1.

### « Example A-3 »

In order to confirm the results obtained by adding aldehyde compounds in the production of polyurethane foam according to the present invention, the inventors decided to proceed with the standard experimental method of Example 1.

In Example A-3, the blending prescription of the initial raw materials follows Example 1, and all subsequent processes are carried out similarly to Example 1. However, instead of supplying 2.7 grams of water in the initial raw material blend, 4.17 grams of glutaraldehyde was newly added.

Other methods were conducted under the same conditions as in Example 1. The blending prescription of the initial raw materials for Example A-3 can be confirmed in Table 1.

### « Example DA-1 »

In order to confirm the results obtained by adding aldehyde compounds and DA reaction products in the production of polyurethane foam according to the present invention, the inventors decided to proceed with the standard experimental method of Example 1.

In Example DA-1, the blending prescription of the initial raw materials follows Example 1, and all subsequent processes are carried out similarly to Example 1. However, instead of supplying 2.5 grams of water in the initial raw material blend, 4.17 grams of glutaraldehyde and 5 grams of DA adduct were newly added.

Other methods were conducted under the same conditions as in Example 1. The blending prescription of the initial raw materials for Example DA-1 can be confirmed in Table 1.

### « Example DA-2 »

In order to confirm the results obtained by adding aldehyde compounds and DA reaction products in the production of polyurethane foam according to the present invention, the inventors decided to proceed with the standard experimental method of Example 1.

In Example DA-2, the blending prescription of the initial raw materials follows Example 1, and all subsequent processes are carried out similarly to Example 1. However, instead of supplying 2.3 grams of water in the initial raw material blend, 4.17 grams of glutaraldehyde and 10 grams of DA adduct were newly added.

Other methods were conducted under the same conditions as in Example 1. The blending prescription of the initial raw materials for Example DA-1 can be confirmed in Table 1.

### « Example DA-3 »

In order to confirm the results obtained by adding aldehyde compounds and DA reaction products in the production of polyurethane foam according to the present invention, the inventors decided to proceed with the standard experimental method of Example 1.

In Example DA-3, the blending prescription of the initial raw materials follows Example 1, and all subsequent processes are carried out similarly to Example 1. However, instead of supplying 2.1 grams of water in the initial raw material blend, 4.17 grams of glutaraldehyde and 15 grams of DA adduct were newly added.

Other methods were conducted under the same conditions as in Example 1. The blending prescription of the initial raw materials for Example DA-1 can be confirmed in Table 1.

In order to confirm the performance of the polyurethane foam obtained by each of the above-mentioned examples, the properties were measured in the following manner.

### « Measurement Results of Maximum Temperature Rise during Polyurethane Reaction »

When the polyurethane foam production method according to the present invention was carried out, in order to confirm the internal temperature rise of the foamed foam due to the heat generated during the urethane reaction, the inventors placed a thermometer at the center of the paper cup introduced in Example 1 and measured the maximum internal temperature rise of the foamed foam.

This method of measuring the internal temperature of the foamed foam was carried out in all cases of Example A-1 to Example DA-3.

The maximum internal temperature rise of the foamed foam obtained by this method is as shown in Table 1 below.

### « Measurement Results of Final Polyurethane Foam Density »

In order to confirm the density of the polyurethane foam obtained by the polyurethane foam production method according to the present invention, the inventors stored the obtained polyurethane foam at room temperature for 2 days, then collected samples from the center of the obtained foam and measured the density. The samples were collected in the size of 50 X 50 X 50 mm, and the density was calculated by dividing the weight (w) by the volume using a precision balance.

This method of measuring the foam density was carried out in all cases of Example A-1 to Example DA-3.

The density of the foamed foam obtained by this method is also shown in Table 1 below.

### « Observation (Measurement) Results of Cracking Phenomenon in Final Polyurethane Foam »

In order to confirm the cracking phenomenon of the polyurethane foam obtained by the polyurethane foam production method according to the present invention, the inventors measured it by tactile examination of the foam samples. This method involved tactically examining whether powder adheres to the surface of the foamed foam when the surface of the specimen is touched by hand.

This method of measuring the cracking phenomenon of the foamed foam was carried out in all cases of Example A-1 to Example DA-3.

The degree of cracking of the foamed foam obtained by this method is also shown in Table 1 below.

**[Table 1]**

| Formulation of Raw Materials for Manufacturing Flexible Polyurethane Foam | | | | | | | |
|---|---|---|---|---|---|---|---|
| Raw Materials | Control | A-1 | A-2 | A-3 | DA-1 | DA-2 | DA-3 |
| PPG¹ | 100 | 100 | 100 | 100 | 95 | 90 | 85 |
| Glutaraldehyde | 0 | 1.39 | 2.78 | 4.17 | 4.17 | 4.17 | 4.17 |
| DA adduct² | 0 | 0 | 0 | 0 | 5 | 10 | 15 |
| Silicone surfactant (L580^{®})³ | 1.0 | 1.0 | 1.0 | 1.0 | 1.0 | 1.0 | 1.0 |
| Amine catalyst (A1^{®})⁴ | 0.1 | 0.1 | 0.1 | 0.1 | 0.1 | 0.1 | 0.1 |
| Amine catalyst (DABCO 33LV^{®})⁵ | 0.4 | 0.4 | 0.4 | 0.4 | 0.4 | 0.4 | 0.4 |
| Tin catalyst (T9^{®})⁶ | 0.38 | 0.38 | 0.38 | 0.38 | 0.38 | 0.38 | 0.38 |
| Water | 4.2 | 3.7 | 3.2 | 2.7 | 2.5 | 2.3 | 2.1 |
| TDI⁷ Index | 105 | 105 | 105 | 108 | 105 | 105 | 105 |
| Maximum temperature (°C) | 150 | 145 | 141 | 136 | 132 | 129 | 125 |
| Free Rise Density (Kg/m³) | 29 | 30 | 30 | 30 | 31 | 31 | 31 |
| Friability | Poor | O.K. | O.K. | O.K. | O.K. | O.K. | O.K. |

| | | | | | | | |
|---|---|---|---|---|---|---|---|
| 1) Triol of polypropylene glycol (OH value: 56 mgKOH/g) 2) DA adduct prepared from castor oil and furfural at 90 °C by the reaction (6) 3) Silicone surfactant from Momentive 4) *tert*-amine catalyst from Momentive 5) *tert*-amine catalyst from EVONIK 6) Stannous octate from EVONIK 7) TDI-80 from OCI (South Korea) | | | | | | | |

The present invention confirms, as verified by the above embodiments, that when glutaraldehyde is added during the manufacture of flexible polyurethane foam (A-1 to A-3), the internal temperature rise due to the exothermic reaction accompanying the foam manufacturing reaction is effectively reduced depending on the amount of glutaraldehyde added, confirming that it is possible to control the internal temperature of the foam through sequential water generation and heat generation reactions.

Furthermore, the present invention also confirms that even when aldehyde compounds and DA reaction products of aldehyde compounds are used together (DA-1 to DA-3), despite reducing the initial amount of added water, stable foam formation with similar foam densities can still be achieved, and the rise in internal temperature due to the exothermic reaction accompanying the foam manufacturing reaction can be further effectively reduced.

Additionally, the present invention confirms that even when glutaraldehyde is added during the manufacture of flexible polyurethane foam (A-1 to A-3), stable foam formation with equivalent foam densities is obtained despite reducing the initial amount of added water. This result confirms that the water generated from aldehyde compounds can be used as a blowing agent.

Furthermore, the present invention clearly demonstrates a significant improvement in the collapse phenomenon of the ultimately obtained polyurethane foamed foam. Although this is confirmed by a sensory test of touching the surface of the sample by hand, it is also theoretically supported. This is because aldehyde compounds react with amine compounds generated during the urethane reaction to form Schiff bases and water, thereby depleting the amount of amine compounds in the foam and reducing the amount of urea compounds generated inside the foam.

Thus, the polyurethane foam obtained by the present invention inevitably contains much less urea compounds among the final urethane foaming components compared to conventional polyurethane foams, both experimentally and theoretically.

Although the manufacturing method of the polyurethane foam and the polyurethane foam manufactured by the manufacturing method have been specifically described in the above, it should be interpreted that this is merely exemplified in the process of explaining the embodiments of the present invention, and not all the features of the present invention are limited to the items mentioned above.

Moreover, anyone skilled in the art would recognize that various modifications and variations can be made based on the disclosure contents of the specification of the present invention, but this is also clearly not beyond the scope of the present invention.

### Industrial Applicability

The present invention relates to polyurethane foam.

## Claims

1. A method for manufacturing polyurethane using raw materials consisting of polyol, isocyanate, water, and other additives, **characterized in that**, replacing the amount of water partially among the above raw materials and adding aldehyde compounds as a new additive when manufacturing polyurethane foam.

2. The method for manufacturing polyurethane as claimed in claim 1, wherein adding aldehyde compounds along with, or separately from, Diels-Alder reaction products of aldehyde compounds as a new additive to replace partially the amount of water among the raw materials.

3. The method for manufacturing polyurethane as claimed in claim 1, wherein the aldehyde compounds, based on weight, are added with a concentration of aldehyde groups of 10 milliequivalents to 300 milliequivalents per 100 grams of polyol.

4. The method for manufacturing polyurethane as claimed in claim 2, wherein the Diels-Alder reaction products of aldehyde compounds, based on weight, are added with a concentration of Diels-Alder reaction products of aldehyde groups of 10 milliequivalents to 300 milliequivalents per 100 grams of polyol.

5. The method for manufacturing polyurethane as claimed in claim 2, wherein the aldehyde compounds and the Diels-Alder reaction products of aldehyde compounds, based on weight, are added with a concentration of aldehyde compounds and Diels-Alder reaction product groups of aldehyde compounds of 10 milliequivalents to 300 milliequivalents per 100 grams of polyol.

6. The method for manufacturing polyurethane as claimed in one of claims 1-5, wherein the aldehyde compounds with two or more non-hybridized double bonds in a molecule are used, even when the aldehyde group is not present.

7. The method for manufacturing polyurethane as claimed in one of claims 1-5, wherein a maleimide compound as the aldehyde compound with two or more non-hybridized bonds in a molecule is used, even when the aldehyde group is not present.

8. A polyurethane foam **characterized by** being prepared from raw materials composed of aldehyde compounds additionally as well as polyol, isocyanate, water as a blowing agent, and other additives, where the additional aldehyde compounds replace partially the amount of water used among the raw materials and the aldehyde compounds react with amine compounds generated in the urethane reaction process to form a Schiff base and water, the water generated along with the Schiff base is then used as additional post-blowing agent.

9. The polyurethane foam as claimed in the claim 8, wherein the raw materials are introduced by adding new Diels-Alder reaction products of the aldehyde compounds, and the aldehyde compounds react with the amine compound generated in the urethane reaction process to generate the Schiff base and water, and the water generated with the Schiff base is used as an additional post-blowing agent, and the Diels-Alder reaction products are used to control reaction heat generated in a urethane reaction process by performing a reversible reaction.

10. The polyurethane foam as claimed in the claim 8 or claim 9, wherein the aldehyde compounds react with the amine compounds generated during the urethane reaction to generate the Schiff base and water, thereby reducing the production of excessive urea compounds inside an urethane foam, thereby reducing the content of the urea compounds in the final urethane foam component.
